# EUROPEAN PATENT SPECIFICATION

(11) **EP 3 362 613 B1**
(45) Date of publication and mention of the grant of the patent: **21.12.2022**
(21) Application number: 16855818.7
(22) Date of filing: 12.10.2016
(51) Int. Cl.: E04B 1/76, E02D 31/02, E04B 1/70, B29C 44/58, E04B 1/80, E04B 1/00

(54) **INSULATING ELEMENT WITH MULTIPLE DRAINING CHANNELS**
ISOLIERELEMENT MIT MEHREREN ABLAUFRINNEN
ÉLÉMENT ISOLANT AVEC DE MULTIPLES CANAUX DE DRAINAGE

(30) Priority: 13.10.2015 NO 20151384
(43) Date of publication of application: 22.08.2018
(73) Proprietor: Jackon AS, 1410 Fredrikstad (NO)
(72) Inventor: AKSELSEN, Øystein, Fredrikstad 1614 (NO)
(74) Representative: Zacco Norway AS
(86) International application number: PCT/NO2016/050204
(87) International publication number: WO 2017/065616

(56) References cited:
- EP-A2- 2 172 598
- WO-A1-2012/001721
- CA-A1- 2 614 522
- CN-U- 204 343 471
- DE-A1- 10 032 461
- DE-U1- 20 116 349
- US-A- 3 000 144
- US-A- 3 165 750
- US-A- 5 056 281
- US-A1- 2004 255 533
- US-A1- 2005 055 983
- US-A1- 2015 135 634
- US-B1- 6 318 041
- US-B1- 6 318 041

## Description

The invention relates to an insulating element with drainage properties.

The invention relates to insulation panels which are arranged on an outer wall of a building, mainly underground, typically on the outside of a foundation of a house.

Insulation boards for external mounting is known in the industry, and often they are shaped by XPS, extruded polystyrene, or EPS, expanded polystyrene. XPS and EPS are materials which in most cases creates a non-permeable barrier between the inner side and outer side when mounted on an exterior wall. Although the insulation effect is obtained, there will be other challenges with such products relating to the drainage of moisture and lack of diffusion. A foundation located below ground contains moisture. Exterior draining masses / layers are therefore important for directing the water down towards drainage for preventing wetting of the wall by direct water pressure from outside. A wall will also absorb moisture from the ground by capillary effect, in that a foundation of concrete or building blocks will "suck" up moisture from the surrounding ground. It will also transport moisture in the form of water vapor from a heated room towards a colder wall. This moisture will accumulate on the wall's surface and in the wall, and give rise to fungus, rot and other moisture damage, if this moisture is not transported out through the wall and the outer insulation board.

A solution that is frequently used today is that there are arranged a diffusion and waterproof dimpled formed plate against the wall. Then, on the outside is arranged an EPS or XPS insulation plate comprising outside drainage channels for transporting water down to the drainage.

This solution provides a diffusion tight structure which prevents drying up of brick wall or concrete wall, and thereby, occurrence of fungi, rot and other moisture damage may arise.

The industry has developed permeable plates, for example: Isodren^{®} and Pordrän^{®}, where each sphere of polystyrene is glued together using bitumen / latex. This increases the permeability of the insulation elements made of this type of spheres, such as a foundation wall plate. Such a plate will decrease capillary inlet, and increase drainage capacity and diffusion properties due to large pore volume. The disadvantage of such an element is that moisture from outside will drain along the spheres in a downward movement pattern and fall as much inside as outside of the downstream sphere in the plate structure. This means that at high moisture influx from the ground, a large part of the moisture may be introduced in towards the outer wall of the building, which it was meant to protect against moisture.

In US 2004/0255533 A1 it is shown a product, and a wall system utilizing such product, adapted to allow drainage of moisture from a wall of a structure. A sheet of corrugated material forms a plurality of ridges and grooves on opposite sides of the sheet of corrugated mate-rial. The sheet of corrugated material is relatively inflexible under a force applied generally perpendicular to the sheet.

In US 2015/0135634 A1 it is shown a structural insulated panel building system comprising panels, comers, ringbeams and boxseams having a molded core of expanded polystyrene sandwiched between, and bonded to, at least two facings.

In US 2005/0055983 A1 it is shown an improved wall cavity drain panel and wall cavity struc-ture includes a grooved insulating panel with a water-permeable fabric over the grooved face and a water perme-able matrix on the fabric at its lower edge and defining a mortar cath trough to prevent weep hole clogging.

In EP 2 172 598 A2, it is shown an insulating panel for inhabited buildings of various kind, in order to insulate thermally the housings into which it is mounted, preferably on to the outer surfaces of their peripheral walls, in a manner to provide for a covering enclosure of the inhabited buildings, which is subsequently covered with finishing materials and parging.

In US 3,000,144 it is shown composite panels for building constructions, and more particularly panels adapted to be reinforced by a ribbing or grid of mortar or grout occupying interstices in the panel and providing load bearing sections of great strength.

WO 2012/001721 A1 discloses another insulating element.

It is therefore a problem in the building industry to create structures that ensures sufficient permeability for moisture transport from a wall structure and into the ground, while at the same time the wall construction is protected against both horizontal moisture penetration of water from the surface of the ground, and by capillary effect.

It is an object of the present invention to provide an insulating element which solves the challenges and problems described above, while the invention further provides alternatives for production methods for producing such insulation element.

The invention is defined by the features of claims 1 and 16.

The invention comprises an insulation element with drainage properties, in one embodiment made of XPS, EPS, or other insulating material, and further comprising drainage channels in one or more orientations through the element. The insulating element is in one embodiment adapted for use underground on the outer wall of a building such as a foundation.

The invention further comprises production methods for providing such insulation element.

A first manufacturing method comprises that the channels are formed in the extrusion- / expansion phase of the insulation element.

Another production method comprises forming of the channels in that the insulation element is provided first in several individual layer / layers, where each layer is formed in a 3-dimensional channel pattern on one or more of its surfaces. Furthermore, the individual layers may be processed to provide one or more ducts/channels, for example by drilling of channels. A number of layers are then joined in such a way that when the two layers are joined, the 3 dimensional channel pattern that was formed on the surface (s) forming channels within the joined element.

Alternative embodiments are defined by the accompanying dependent claims.

To increase understanding of the invention, following figures are provided, where the figures is to be understood as alternatives to the embodiment of the invention only:
Figure 1: Example of existing technology
Figure 2: Insulation element with drainage channels
Figure 3: Drainage paths in the insulation element
Figure 4: Detail from the side of the insulation element
Figure 5: Example of connecting means
Figure 6: Example of linked/connected insulation elements
Figure 7: Detail of extrusion form
Figure 8: Detail of extrusion form
Figure 9: Detail of extrusion form
Figure 10: Detail of drainage spear
Figure 11: Insulation element with visible overlapping fabric /liner on two sides
Figure 12: Section of surface of the insulation element displaying recess around the drainage channel
Figure 13: Drainage paths in insulation element, oblique horizontal channels

The invention will now be discussed in detail with reference to the accompanying figures. Reference numbers to the figures are included to improve the understanding of the description, but shall not be understood as limiting embodiments, as the present invention may be provided in many variations according to the accompanying claims.

It is in the specification described horizontal and vertical orientations. This is done to increase the readability of the figures and the various embodiments options discussed. The present invention is, however, not limited by orientation, and it should be understood that the drainage element may be disposed on a wall or placed in any orientation independent of said orientations.

The word permeability is in this document used to describe the penetrability of the drainage element, its ability to transport liquid or gas. High permeability means that the transport properties of drainage element are good.

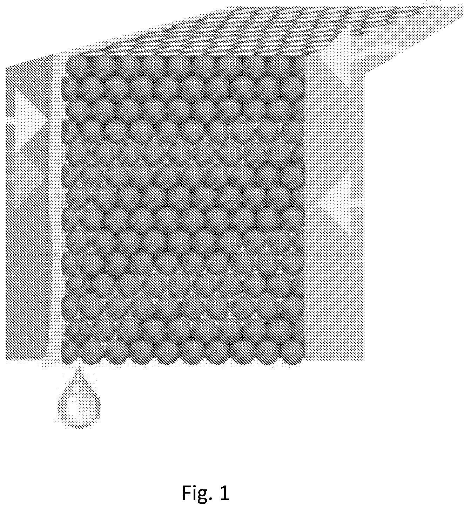

By studying the transport of moisture in permeable plates, such as for example Isodren^{®} and Pordrän^{®} in Figure 1, it is seen clearly that with the available leading technique it is possible to achieve good diffusion of moisture in horizontal directions while preventing capillary effect. However, there is little control over moisture paths in downward pointed vertical direction. At high humidity transport the moisture will spread randomly through the element. The element also has a limited throughput given by the shape of spheres and binder needed to produce the element. The production process is also considerably more extensive than, for example, production of insulation in EPS and XPS.

It is an object of the invention to provide an insulation plate with higher permeability for moisture, such as for example Isodren^{®} and Pordrän^{®}, and that also has a very high drainage capability. Present invention may be produced in an ordinary manner such as for example traditional EPS insulation.

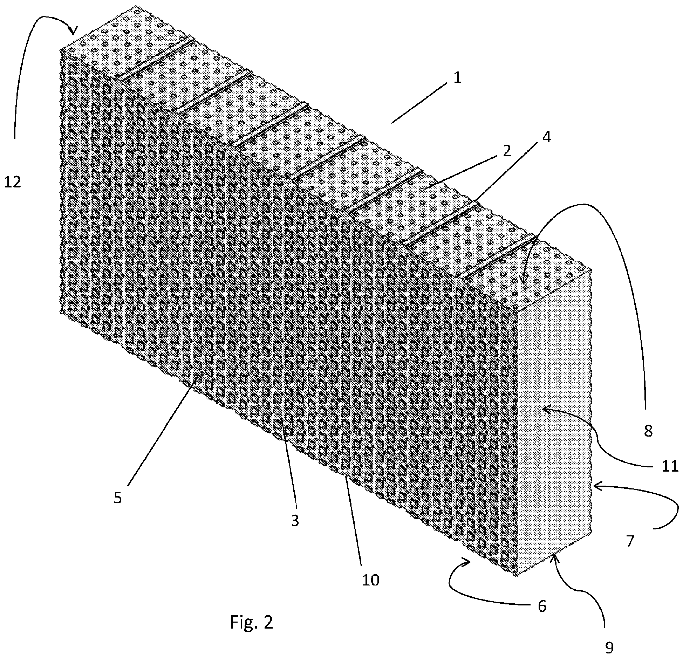

Figure 2 shows an embodiment of the present invention of an insulation element 1. It appears in the figure a right angle rectangular shape, but one can imagine that for special needs, the invention will be adaptable to the form suitable for the intended purpose. It is conceivable: oblique angles between walls and / or curved walls. Forms with more or fewer edges, for example a pyramid shape, are conceivable embodiments of the present invention, although such adjustments are not discussed in detail in this description. The insulating element is normally made as a rectangular block of EPS or XPS where the insulation element 1 has two sides 6, 7, a backside 6, which in use will be facing a wall it will be mounted to, and a front side 7, which in use will face away from the wall it is to be assembled to. Further, the insulating element has a top 8 and a bottom side 9, as well as a first side 11 and a second side 12.

The insulating element is manufactured for when in use to be arranged with the back side 6 against an outside wall of a building wall, and a front side 7 against the ground outside the building wall, and is further formed so that a plurality of channels 2, 3 are arranged in at least one orientation, wherein a first orientation is substantially vertical 2 through the element 1, and an alternative second orientation is substantially horizontal 3 through the element 1.

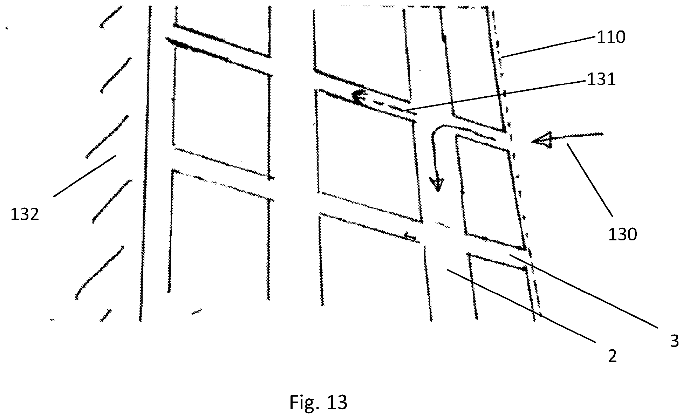

In further embodiments, the channels may be provided in order to form an angle relative the horizontal orientation and / or the vertical orientation as discussed below. In the figure, the vertical channels 2 are arranged to drain moisture from the above and downwards, whereas the horizontal channels 3 are provided to increase the permeability of the element, and thus transport moisture from one side of the element to the other. In an alternative embodiment, as shown in Figure 13, the horizontal channels are angled so that they fall down from the back side of the element, the one arranged towards the building outer wall 132, toward the front side of the element, the one that faces towards the ground, so that the moisture 130 in the channels has a smaller resistance downward toward the ground than towards the building's exterior wall. As soon as a horizontal 3 channel meets a vertical 2 channel will all, or most of this, humidity 130 fall downwards trough the vertical 2 channel. Nothing, or very little, of the moisture 131 will choose the highest resistance path upward in the continuation of the horizontal channel 3, marked by dashed arrows in the figure.

The insulating element may further be formed with projecting dimples/lugs 5 on the front- and back sides 6, 7, and at least at the rear side 6 of the element. The dimples/lugs 5 have several functions, wherein one is it to define an air layer between the wall and the element when it is mounted on a building's exterior wall, and they will create space for diffusion moisture which is channeled towards the horizontally-prepared channels 3 through the insulating element 1. A dirt obstructive filter fabric /liner 110 may be provided on the front side 7 of the element 1, the side fronting, and which comes into contact with, the ground. The fabric /liner can be mounted on the dimples/lugs 5 so that the air layer formed in the space between the element and the fabric /liner where not tabs are attached to the fabric /liner.

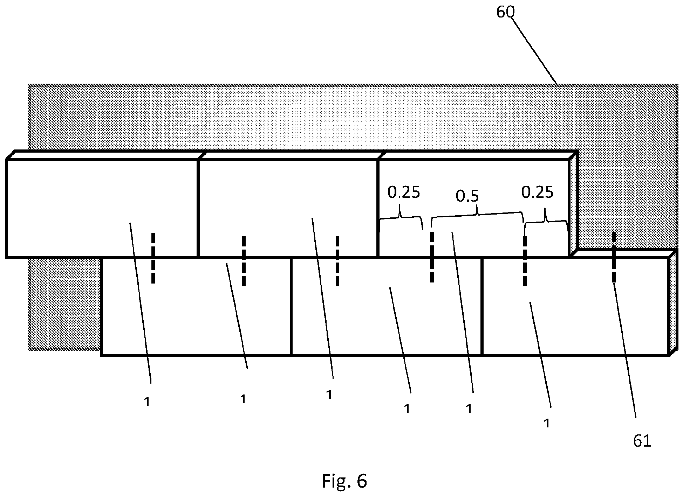

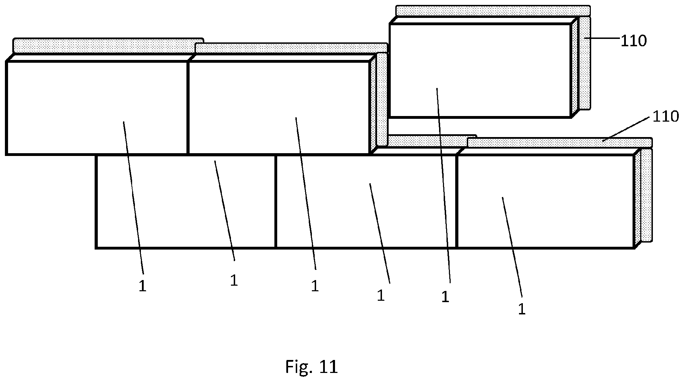

The fabric /liner 110 may in one embodiment be arranged so that it projects beyond the longitudinal / width in two directions, as shown in Figure 11, showing the wall in Figure 6 from the opposite side thereof facing towards the exterior wall. Thus, by assembling a plurality of elements 1 side by side and above each other is ensured that the fabric /liner 110 overlaps to adjacent elements or fabric /liner of the adjacent elements overlap the element.

An alternative to the dimples/lugs 5 on the front and rear side is to form recesses in the element side surface 5, 6 around the openings of the horizontal channels. Such a pattern can be tapered recesses which are deepest around the horizontal openings, and as such have a star pattern in which the arms are of different length, and the longest arms may extend fully into the adjacent conical star pattern. In this way, moisture may be transported to a horizontal channel from any point of the element. Adequate support for the fabric /liner is maintained, in areas where the recess depth is minimal or zero.

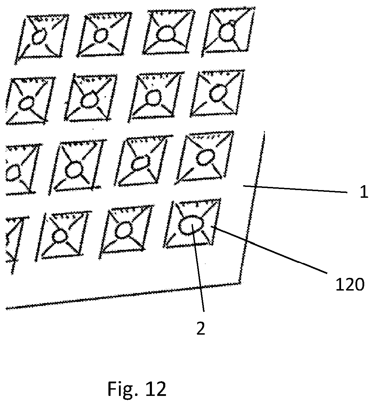

In an embodiment of the insulation element 1 it is advantageous to provide a recess 120 around the openings on the top side 8 and bottom side 9 around the outlets of the vertical drainage channels 2 as shown an example in Figure 12. The purpose is to improve drainage communication between the vertical drainage canals 2 when the insulation elements 1 are mounted on top of another. Specifically this will prevent that drainage is degraded if the elements are displaced in relation to each other. By providing a recess area 120 which in sum is greater than the area which is not recessed of the top side / bottom side of 8.9, it will be ensured that a portion of each vertical drainage channel 2 discharge recess 120 in one element will communicate with the inlet of a vertical drainage channel 2 recess 120 in the insulation element 1 which is arranged underneath the element. The recesses can have any shape, such as rectangular, square, circle, star shaped, or irregularly shaped.

The vertical channels extends from an upper side 8 of the insulating element and down through to the bottom side 9 of the element. The channels culminates at one end into an opening at least on the bottom side 9 of the insulation element, and may also at its other end culminate in an opening on the upper side 8 of the insulation element, as shown in Figure 2. In an alternative embodiment, the vertical channels may be closed in the elements upper side 8, thereby the moisture that resides on the upper side 8 of the item is not drained down through the element, but alternatively flows out to the sides of the element. Alternatively, a non-permeable membrane may be mounted or provided on the item's upper side. This can be beneficial if several elements are mounted above one another in a high wall, and where good vertical moisture drainage is required, but where one wishes that the moisture from the top side of the upper element is directed away from the elements drainage channels. The membrane may be part of a top element which can also form an inclined surface that lead moisture from above the insulation elements 1 out to the front side 7 of the insulation elements.

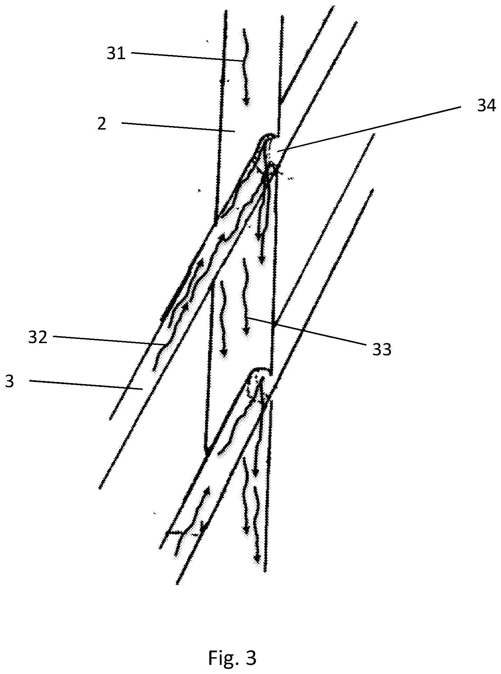

The horizontal channels extending from a first side 6, the back of the element to a second side 7, the front side, of the element, and in one embodiment of the insulation element arranged such that they intersect partially through one or more of the vertical channels in the channel intersection 34 (as shown in a detail of the channels in figure 3), so that a horizontal channel 3 has at least drainage communication with one or more vertical channels 2. Typically, such an intersection 34 may have sufficient surface area for moisture, both vaporous and liquid shape, can easily communicate from the horizontal channel 3 to the vertical channel 2 (as shown in Figure 3), where the moisture 32 from the horizontal channel 3 and moisture 31 in the vertical channel 2 is collected 33 and is drained further down in the vertical channel 2 and is shown by arrows 31, 32, 33. Moisture in vapor form (steam) will be transported further outwards in the horizontal channel when a water vapor pressure difference is present between the inner side and outer side of the drainage plate.

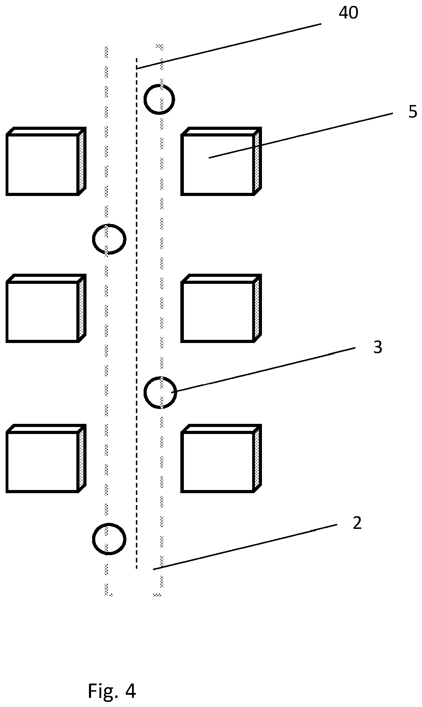

Figure 4 shows a possible embodiment of a detail of how the insulation element appears for example from the back side 6. One can see the projecting ridges / projections 5 and openings of the horizontal channels 3 which are arranged in the desired position, and which can be adapted for the particular drainage plate. Furthermore, the position of the vertical channels 2 indicated by a dotted rough line. Central axis 40 to the vertical channels are also plotted to visualize the relative position of the horizontal channels 3 in relation to the vertical channels. One can also imagine an embodiment where the vertical and horizontal channels are centric with respect to each other.

It will, in one embodiment of the invention may be advantageous to angle the horizontal channels 3 down from the first side 6 of the insulating element which are facing towards the outer wall to the other side 7 which faces towards the ground. It will thus be ensured that moisture from the vertical channels 2 are prevented further to be transported through the crossings 34 and the horizontal channels 3 towards the exterior wall.

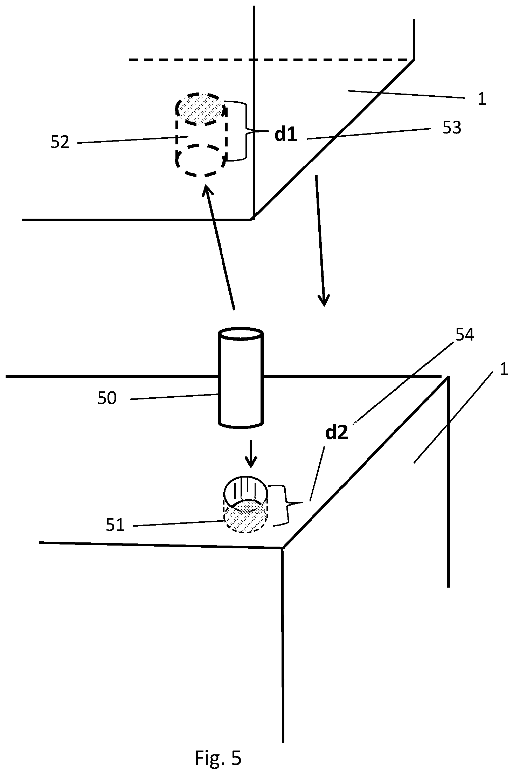

Insulation element may further be formed with coupling mean for connecting multiple insulation elements. One way to connect these may be by forming a recess, groove 10 and a protruding bump, tongue 4 in a tongue and groove type coupling device. In Figure 2 there is shown a plurality of recesses 10 which are arranged at a distance on the bottom side 9 of the insulating element and on the upper side 8 is arranged a number of projecting protrusions 4, wherein the projecting protrusions 4 on the upper surface 8 are formed so that they will fit into the shape and spacing of recesses 10. When an insulating element is connected vertically with another insulation element by the connecting means, the connecting means will simultaneously be working so that the vertical channels 2 are arranged in the lateral direction such that they are fully or partially positioned directly opposite each other. It would still be possible that the insulating elements at a tongue and groove 4, 10 design of the connecting means are displaced in the direction out / in from the exterior wall they are mounted to. This may happen if for example the exterior wall they are mounted onto is not completely plane. Connecting means that prevent in / out displacement on top of each other mounted insulation elements can for example be formed, as shown in Figure 5, in that a recess 51 which is limited in extent, such as a round hole 51, 52 of limited depth 53, 54, is arranged in the top side 8 and bottom side 9 of the insulation element 1, having a position such that when it is correctly assembled the elements channels are positioned directly opposite each other. By passing a pin / pin / plug 50, where splint 50 is adapted to the shape of the recess 51, 52 and is of a length equal to or less than the sum of the two opposite arranged recesses, d1 + d2, and at least longer than the deepest of the recesses 51, 52, into the recesses 51, 52 for interconnection so that the insulating elements, when they are connected, is arranged guided by the splint 50 which ensures that insulation elements 1 are accurately positioned relative to each other. Alternatively, this can be solved with a tongue on one plate and a recess in the other (male / female design).

Interconnection means could be resolved in a similar way by a type of fittings fastened in the insulation elements to be interconnected by designated positions or recesses disposed in opposite facing areas in the connecting insulation elements (not shown), and then stapled / screwed / bonded / plugged or another to ensure that the positions of insulating elements relative to one another is kept stable.

An example of connecting a plurality of elements is shown in Figure 6, wherein a plurality of insulation elements 1 is arranged on the outside of an exterior wall 60. The insulation elements are arranged with a lateral offset so that joints between insulation elements do not overlap. This is done to strengthen the binding, and assumes that connection means are provided in such a manner that this is supported. As shown in the example in Figure 6, there are a number of connection means of at least 2 in each of the top side 8 and bottom side 9 of each insulation element 1 arranged in lateral position 61 positioned at about ¼ the length of one of the outer edges of the upper side 8 and the bottom side 9 of insulation elements 1. The number of connection means may be more than two, but preferably in a number dividable by two and arranged symmetrically around the center of the top side and bottom side of the insulation element.

In the following two production methods of the insulation element 1 will be described In the first method will be used a form with ducts in two orientations, hereinafter called horizontal orientation and vertical orientation. It is understood that the two orientations are not necessarily perpendicularly arranged relative to each other and / or with respect to two of the outer walls of the insulating elements although this orientation is described in the figures. The figures should only be interpreted as a possible embodiment of the present invention, and it is the claims that will define any potential constraints.

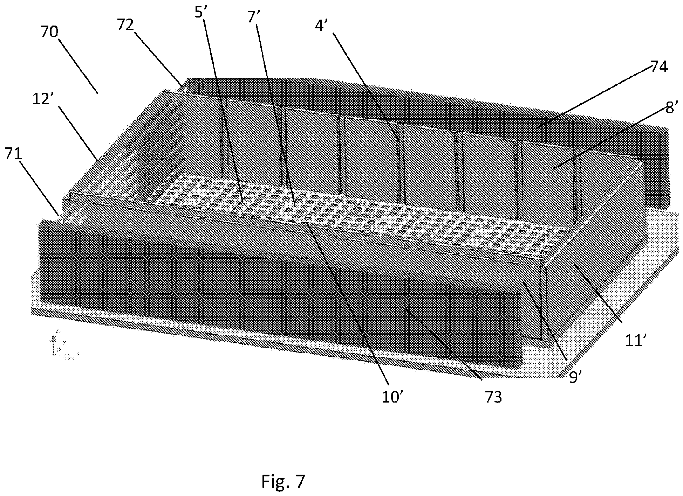

In Figure 7, a portion of an expansion form 70 of the insulation element 1 is shown, hereinafter referred to as expansion form 70. The base shape is formed by the innermost open box comprising 5 sides 7', 8', 9', 11', 12'. In panel 8' it is shown grooves 4' which represents the projecting shape 4 of the connecting means of the insulating element 1 as it appears in Figure 2. In panel 9' it is shown grooves 10' representing the recess 10 of the connecting means of the insulation element 1 as it appears in Figure 2. In panel 9' it is shown grooves 5' which represent the projecting dimples/lugs 5 of the insulation element 1 as it appears in Figure 2. In the upper side of the forming form 8 'and lower side 9' there are through passages for receiving vertical channel shape pins/spears 71, 72, hereinafter referred to as vertical spears, for production/concretizing the vertical channels. In the figure there is shown two rows of vertical spears 71, 72, but it is understood that the entire forming form can be filled with such spears 71, 72. The number and pattern will vary for the requirement of drainage desired in the finished insulation element 1 which is formed in the expansion form 70.

Further, it is in in the figure shown two core pulling devices 73, 74, hereafter called core puller. The core pullers 73, 74 are holders of the spears 71, 72, and in the figure there are shown two such core pullers comprising spears. In the figure the spears, when introduced into the expansion form, meet and be interconnected by for example a male/female coupling where a first set of spears 71 for example have a conically shaped tip and a second set of spears 72 are formed with a conical hole in the outer end of the spear for receiving the first set 71 of conical tips. It is conceivable to use only one set of vertical spears 71, and that these are mounted on only a core puller 73, and when they are led into the form extends throughout the space in the form, or at least as far as it is requested that the channels is to be formed in the produced insulating element 1. In the latter design the spears may have a conical shape over all or part of the length of spear that is arranged in the form /final element, with the narrowest part of the conical shape in the tip end of the spear. The spears may otherwise be of any circumferential shape. It is conceivable that in most cases will be a circular shape on the spears, such that drainage channels that are formed in the insulating element also will have a circular shape.

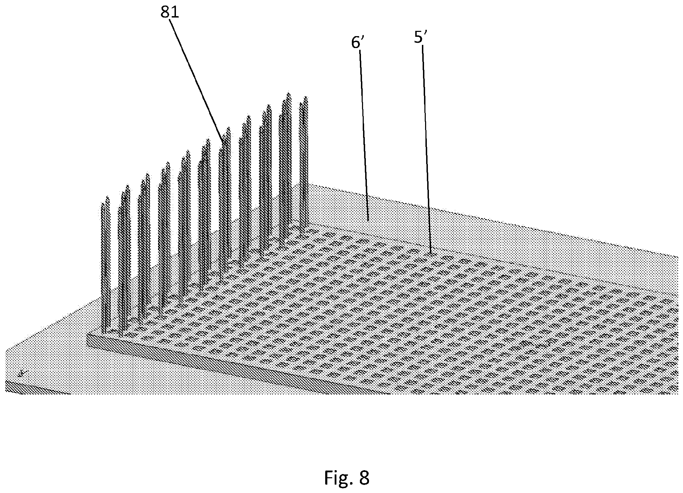

In Figure 8, the last side plate 6 'of expansion / extrusion form is defined with mounted horizontal spears 81. The form may also comprise recesses 5' for the definition of projecting dimples/lugs 5 in the produced insulating element 1. The side plate 6 represents the form plate of the back side 6 of the produced insulating element, and is mounted on the expansion form 70 such that when assembled the expansion form sides 6 ', 7', 8 ', 9', 11 ', 12' will define an enclosed space for forming the insulation plate 1. The horizontal spears 81 may have any circumferential shape, also tapered in a decreasing circumference towards the tip of the spear. In the figure it is shown only 3 rows of horizontal spear 81. This is done to increase understanding of the assembly. However, it is envisaged that the entire side plate 6 'will be covered by corresponding rows of horizontal spears 81 in the same manner as explained for the expansion form as shown in Figure 7.

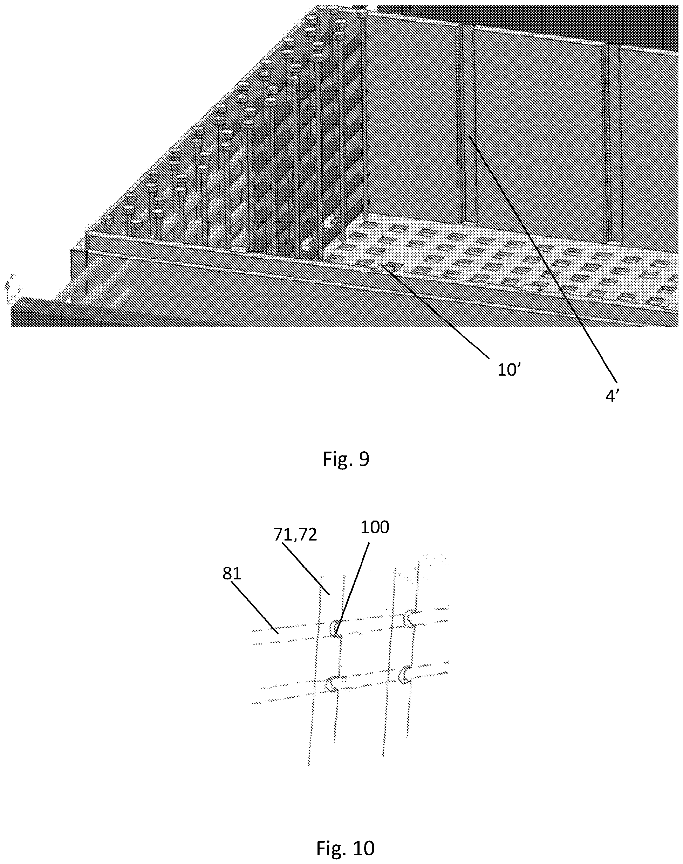

In figure 9 is shown how the vertical spears 71, 72 and the horizontal spears 81 are arranged when the expansion form is assembled. The side plate 6 'which holds the horizontal spears 81 are not drawn to increase the visibility of the inside of the form.

The vertical spears 71, 72 may be formed with guiding grooves 100 in the form of recesses for cooperating with intersecting horizontal spear 81, as in an example of the embodiment shown in figure 10. The location of these recesses will coincide with the positions where the vertical spears 81 will be inserted passing the vertical spears 71, 72 when the side plate 6 'which forms which forms the back side 6 of the insulating element 1 is put into place in the expansion form 70. The portions of the spears 70, 71, 81, both the horizontal and vertical which is in contact when expansion form is assembled will form a communication area 34 between the channels 2, 3 in the produced insulation plate as it was discussed and shown for figure 3. In this area 34 the moisture could drain between the horizontal 3 and vertical 2 channel. The recesses 100 in the vertical spears 71, 72 will typically have the shape as the peripheral shape which the horizontal spears has in the contact point 100.

The actual location of the recesses / guide slots in the vertical spears 71.72 can be located and designed in several ways. One can imagine that the recess 100 is shaped to embrace more than half of the horizontal spears 81 and thus have a form of mechanical holding torque "around" the horizontal spears 81 when spears in both directions is mounted. There is also a further option to embrace the whole shape of the horizontal spear 81 in the recess 100 in the vertical spears 71,72. Then the recess 100 is formed as a channel through which the respective vertical spear 71,72 receives the horizontal spears 81 so that they will pass through the vertical spears 71, 72 when they are mounted. There is no limit in the lateral placement of these other than that if the horizontal spears 81 crosses over more than one vertical spear 71, 72, then the recesses 100 in different vertical lances 71, 72 must be arranged in such a way that they can receive respective horizontal spear 81 without too much friction when they are installed.

A particular embodiment of the expansion form will not have any horizontal spears 81. The side plate 6' which forms the backside 6 of the insulation element 1 will then have no spear.

To produce an insulation element as discussed above, the vertical spears are first inserted into the expansion form, then the side plate 6 'which forms which forms the back side 6 of the insulation element 1 is mounted. Polystyrene in un-expanded / -extruded form will be filled in the form either before the latter side plate is fitted or filled into the form after complete assembly of the expansion form, then through a suitable duct with a valve (not shown). The expansion / extrusion process is carried out and when the insulation element is cured and sufficiently cooled the first side plate 6 ', which forms the back side 6 of the insulation element 1 with the alternatively mounted horizontal spears 81, is drawn out from the insulation element and expansion form. Then the core plate 73, 74 is pulled, which have the horizontal spears 71, 72 mounted, out of the expansion form 70. Thereafter, the insulating plate is pressed out of the expansion form.

If the side plate 6 ' which forms the back side 6 of the insulating element 1 did not have horizontal spears mounted, the horizontal channels may alternatively be provided in the insulating element in that the insulation element after production undergoes a further forming process wherein horizontal drainage channels in the element is either drilled, or burned in desired pattern and direction. For such a forming process of the horizontal channels it may be used tools which may consist of a drill bit, filament, laser or other.

In a further method of producing the insulation element 1 according to the description of the insulating element 1, above, the insulation element 1 may be produced in multiple steps in which the insulation element is prepared in layers. One layer corresponds to the thickness of the element between each row of vertical channels. One layer may then either be manufactured with side plates formed with inverted shape of one half of each of the vertical channels, or also one layer may be formed as a plain rectangular (or other shape) plate, which after manufacturing undergoes shaping process by means of a pressure plate / pressure roll, applying a desired shape, for example, with said half forms of the vertical channels. To produce the final insulation element 1 a number of layers is mounted together by for example gluing the layers together. Each of the half-shaped vertical channel will be mounted opposite correspondingly shaped half channel in adjacent layers so that the channels inside the element is formed and acquires its final shape. The outer side plate in each side can be formed specifically and for example, have a similar pattern consisting of projecting ridges 4. The vertical channels may be formed by that the desired number of layers are glued together, or they can be made within each of the layers prior to assembly by any of the methods as discussed above.

Further, the horizontal may be provided in the individual layers of the insulation element before assembly, in that the insulation element layer after production undergoes a further forming process, wherein horizontal drainage channels is either drilled or burned in the desired pattern and direction. Different tools may be used for providing the horizontal channels, for example a drill bit, filament, laser or other. When the elements are assembled, for example by gluing, the element will have both the vertical channels and horizontal channels, as shown in the figures.

It is in this description described EPS and XPS material in the insulation element.

When selected insulating foam material then the element will provide an insulating capability.

The invention may also be applied if one needs a material that conducts heat and that provide draining capabilities as in the described manner. It may then be possible to use both the device and the production method, but where the material is replaced with foam able heat conductive material, such as for example extruded aluminum. Other materials may be used.

In further embodiments, materials that are neither good insulating material nor thermally conductive materials may be chosen if thermal characteristics are not important, but wherein the drainage properties are required.

In a further application of the present invention the drainage element is used in the ground under the floor where the water vapor pressure direction is from the floor towards the colder ground. The drainage element will in this scenario be arranged such that the horizontal channels 3 will be positioned in a vertical direction.

The individual components and features in the above described embodiments and in the accompanying figures may be used in any combination, including combinations that are not shown, and still be within the protection scope of the present invention which is defined by the appended claims. For example, the drainage element may have only one set of channels, either horizontal or vertical channels, lining may be provided on both sides of draining element or only on the side of the drainage element facing the outer wall, or even on the element upper side and / or underside.

## Claims

1. Insulating element (1) for externally attachment to an external wall, consisting in a single block, normally rectangular, of insulating material, the insulating material being expanded polystyrene, EPS, or extruded polystyrene, XPS,
the block having a back side (6), a front side (7), a top (8), a bottom (9), a first (11) and a second (12) side, wherein the back side (6) in use will be facing a wall it will be mounted to, and the front side (7) which in use will be facing away from the wall it is to be assembled to, and
a first set of a plurality of drainage channels (2) in a first orientation through the insulation material,
wherein the first set of drainage channels (2) are arranged in a vertical orientation from top to bottom of the insulation element (1),
wherein the first set of drainage channels (2) comprise a plurality of vertical drainage channels in two or more vertical layers relative the back side (6) in the insulation element (1),
wherein a second set of a plurality of drainage channels (3) is arranged in a second orientation through the insulation element (1),
wherein the second set of drainage channels (3) are arranged in a horizontal orientation from the back side toward the front side of the insulating element, or
the second set of drainage channels (3) are arranged in an angular orientation, different from 90 relative the orientation of the first set of drainage channels (2) from above on the back side (6) downward toward the front side (7) of the insulating element,
wherein each drainage channel in the second set of drainage channels (3) opens out, in one of:
space created by projecting dimples/lugs (5) arranged on the front and/or back side (6, 7) for channeling diffusion moisture towards the drainage channels (3), and
into a first recess on the back side (6), and a second recess (120) on the front side (7).

2. The insulating element according to claim 1, wherein at least one of the number of drainage channels (2) in the first set cut through, at least partially, at least one of the number of drainage channels (3) in the second set in order to form a drainage communication (34) between the intersecting channels.

3. The insulating element according to any one of previous claims, wherein the second set of drainage channels (3) are arranged in a horizontal orientation from the back side (6) toward the front side (7) of the insulating element (1).

4. The insulating element according to any one of previous claims, wherein the drainage channels (2,3) are evenly distributed throughout the insulating element (1) in both orientations.

5. The insulating element according to any one of previous claims, wherein the first set of drainage channels (2) has a larger diameter than the second set of drainage channels (3).

6. The insulating element according to any one of claims 1-4, wherein the first set of drainage channels (2) has an equal diameter to that of the second set of drainage channels (3).

7. The insulating element according to any one of claims 1-4, wherein the first set of drainage channels (2) have a smaller diameter than the second set of drainage channels (3).

8. The insulating element according to any one of previous claims, wherein the first set of drainage channels (2) and / or the second set of drainage channels (3) are conically shaped.

9. The insulating element according to any one of previous claims, wherein the total area of the first recesses (120) on the first side (6) is greater than the total area of the first side that is not part of recesses (120).

10. The insulating element according to any one of previous claims, wherein the total area of the second recesses (120) on the second side (7) is greater than the total area on the second side which is not part of recesses (120).

11. The insulating element according to any one of the preceding claims, wherein on the second side (7) of the insulation element (1) is arranged a covering material (110) which is permeable to fluids and not permeable for particles such as sand and soil.

12. The insulating element according to claim 11, wherein: the covering material (110) are arranged on the whole of the at least one side (6,7) and with a protruding flap in at least one vertical direction of the insulating element (1) and at least one horizontal direction of the insulation element (1), so that when mounting several insulation elements together in width and height it will be an overlapping covering material between any insulating element (1) and the adjacent insulating element (1).

13. The insulating element according to any one of the preceding claims, wherein alignment means (4, 10, 50, 51, 52) is provided in the top surface and the bottom surface of the insulating element, said alignment means (4, 10, 50, 51, 52) is provided for ensuring the mounting in the correct position relative to other insulation elements (1) , drainage elements or building elements.

14. The insulating element according to claim 13, wherein alignment means comprises a plurality of projecting pins/splints (4, 50) in the top or bottom surface and a plurality of recesses (10, 51) in the other of the top or bottom surface that does not have protruding pins, wherein the projecting pins (4, 50) in a first insulating element (1) cooperates with recesses (10, 51) in a second insulating element (1) for precise vertical alignment when mounting two insulation elements (1) together.

15. The insulating element according to any one of the preceding claims, wherein the insulating element (1) is constructed of glued expanded polystyrene spheres.

16. Method for production of insulating element (1) according to any one of the preceding claims, wherein the production method comprises providing a form (70) comprising a plurality of sides (6 ', 7', 8 ', 9', 11 ' , 12) for expanding or extruding an insulating element (1), **characterized by:**
arranging in at least one side (8 ', 9') of the form a plurality of openings for receiving a corresponding number of protruding spears (71) which in turn is connected in one end to a first core puller (73), and
the production method further comprising: providing a recess in the end of the spears (71) pointing away from the core puller (73), and further providing a second set spears (72) mounted on a second core pull (74), wherein core pullers (73,74) leads the spears (71 , 72) through designed channels in the opposite sides (8 ', 9') of the form so that the spears reach each other inside the form, and that the spears (71) with a recess in the end corresponds to and interacts with the respective spear (72) connected to the second core puller (74), leading the first set spears (71, 72) mounted to the first core puller (73, 74) into the first side (9', 8') of the form having openings for receiving the spears (71, 72), and the production method further comprising:
providing the sides (7 ', 8', 9 ', 11', 12) in the form such that the form is closed on all sides except a last side (6'),
inserting the first set of spear (71) attached to the first core puller (73) in the first side (9 ') of the form having channels for receiving spears (71), and further
inserting the second set of spears (72) attached to the second core puller (74) in the other side (8 ') of the form having channels for receiving spears (72), and further
arranging the last side (6 ') in the form such that the form is closed on all sides, filling material in the form which then expands or extrudes into the form,
when the material in the form is expanded or extruded, pull the first core puller (73) away from the form such that the spears (71) are completely pulled away from the form, and pull the other core puller (74) away from the form such that the spears (72) are completely pulled away from the form, and removing the form from expanded or extruded material, by removing first the last mounted side (6 ') and then pushing out the extruded element.

17. Method for production of insulating element (1) according to claim 16, the method further comprising
arranging a plurality of spears (81) in the last side (6 ') in order to form horizontal channels in the insulating element (1),
arranging in the first and / or second set of spears (71,72) a plurality of recesses or throughchannels (100) for cooperating with intersecting spear (81), and the production method further comprising:
arranging the sides (7 ', 8', 9 ', 11', 12) in the form such that the form is closed on all sides except a last side (6 '),
inserting the first set of spears (71) attached to the first core puller (73) into the first side (9 ') of the form having channels for receiving spears (71), and further alternatively
inserting the second set of spears (72) attached to the second core puller (74) into the other side (8 ') of the form having channels for receiving spears (72), and further
arranging the last side (6 ') comprising the spears in the form (81) in the corresponding position such that the spears engage with the recesses (100) in the first and second set of spears (71, 72) such that the spears (71, 72, 81 ) rest in a fixed position when mounted, and such that the form is closed on all sides,
filling material in the form which then expands or extrudes into the form,
when the material in the form is expanded or extruded, pulling the last side (6 ') with spears (81) away from the form so that the spears (81) are entirely pulled away from the form, then draw the first and
any other core pullers (73, 74) away from the form so that the spears (71, 72) are entirely pulled away from the form, and then eject the extruded element.

## Patentansprüche

1. Isolierungselement (1) zur äußerlichen Befestigung an einer Außenwand, bestehend aus, in einem normalerweise rechteckigen einzelnen Block, einem Isolierungsmaterial, indem das Isolierungsmaterial expandiertes Polystyrol, EPS, oder extrudiertes Polystyrol, XPS ist,
indem der Block eine Rückseite (6), eine Vorderseite (7), eine Oberseite (8), einen Boden (9), eine erste (11) und eine zweite (12) Seite aufweist, wobei die Rückseite (6) unter Anwendung einer Wand zugewandt ist, an der sie montiert wird, und die Vorderseite (7) unter Anwendung der Wand abgewandt ist, mit der sie zusammengebaut werden soll, und
einen ersten Satz von einer Mehrheit von Ablaufkanälen (2) in einer ersten Ausrichtung durch das Isolierungsmaterial,
wobei der erste Satz von Ablaufkanälen (2) in einer vertikalen Ausrichtung von oben bis unten des Isolierungselements (1) angeordnet sind,
wobei der erste Satz von Ablaufkanälen (2) eine Mehrheit von vertikalen Ablaufkanälen in zwei oder mehreren vertikalen Schichten im Verhältnis zur Rückseite (6) im Isolierungselement (1) umfassen,
wobei ein zweiter Satz einer Mehrheit von Ablaufkanälen (3) in einer zweiten Ausrichtung durch das Isolierungselement (1) angeordnet ist,
wobei der zweite Satz von Ablaufkanälen (3) in einer horizontalen Ausrichtung von der Rückseite gegen die Vorderseite des Isolierungselements angeordnet sind, oder
der zweite Satz von Ablaufkanälen (3) in einer winkeligen Ausrichtung, die sich von 90 unterscheidet, im Verhältnis zur Ausrichtung des ersten Satzes von Ablaufkanälen (2) von oben auf der Rückseite (6) nach unten gegen die Vorderseite (7) des Isolierungselements angeordnet sind,
wobei jeder Ablaufkanal im zweiten Satz von Ablaufkanälen (3) nach außen mündet, in einen von:
einen Raum geschaffen durch Vorragen lassen von Grübchen/Ösen (5), die auf der Vorder- und/oder Rückseite (6, 7) angeordnet sind zum Kanalisieren von Diffusionsfeuchtigkeit gegen die Ablaufkanäle (3), und
in eine erste Ausnehmung auf der Rückseite (6) und eine zweite Ausnehmung (120) auf der Vorderseite (7).

2. Isolierungselement nach Anspruch 1, wobei mindestens einer der Anzahl von Ablaufkanälen (2) im ersten Satz durch, zumindest teilweise, mindestens einen der Anzahl von Ablaufkanälen (3) im zweiten Satz durchschneidet, um eine Ablaufverbindung (34) zwischen sich kreuzenden Kanälen zu bilden.

3. Isolierungselement nach einem der vorgehenden Ansprüche, wobei der zweite Satz von Ableitungskanälen (3) in einer horizontalen Ausrichtung von der Rückseite (6) gegen die Vorderseite (7) des Isolierungselements angeordnet sind (1).

4. Isolierungselement nach einem der vorgehenden Ansprüche, wobei die Ablaufkanäle (2,3) durch das Isolierungselement (1) hindurch in beiden Ausrichtungen gleichmäßig verteilt sind.

5. Isolierungselement nach einem der vorgehenden Ansprüche, wobei der erste Satz von Ablaufkanälen (2) einen größeren Durchmesser als der zweite Satz von Ablaufkanälen (3) aufweist.

6. Isolierungselement nach einem der Ansprüche 1-4, wobei der erste Satz von Ablaufkanälen (2) den gleichen Durchmesser als der zweite Satz von Ablaufkanälen (3) aufweist.

7. Isolierungselement nach einem der Ansprüche 1-4, wobei der erste Satz von Ablaufkanälen (2) einen kleineren Durchmesser als der zweite Satz von Ablaufkanälen (3) aufweist.

8. Isolierungselement nach einem der vorgehenden Ansprüche, wobei der erste Satz von Ablaufkanälen (2) und/oder der zweite Satz von Ablaufkanälen (3) eine konische Form aufweisen.

9. Isolierungselement nach einem der vorgehenden Ansprüche, wobei der gesamte Bereich der ersten Ausnehmungen (120) auf der ersten Seite (6) größer als der gesamte Bereich der ersten Seite ist, der nicht Teil der Ausnehmungen (120) ist.

10. Isolierungselement nach einem der vorgehenden Ansprüche, wobei der gesamte Bereich der zweiten Ausnehmungen (120) auf der zweiten Seite (7) größer als der gesamte Bereich der zweiten Seite ist, der nicht Teil der Ausnehmungen (120) ist.

11. Isolierungselement nach einem der vorgehenden Ansprüche, wobei es auf der zweiten Seite (7) des Isolierungselements (1) ein Abdeckungsmaterial (110) angeordnet ist, das für Fluide durchlässig ist und für Partikel wie Sand und Erde nicht durchlässig ist.

12. Isolierungselement nach Anspruch 11, wobei: das Abdeckungsmaterial (110) auf der Gesamtheit der mindestens einen Seite (6,7) angeordnet ist und mit einer vorspringenden Lasche in mindestens einer vertikalen Richtung des Isolierungselements (1) und mindestens einer horizontalen Richtung des Isolierungselements (1), so dass wenn mehrere Isolierungselemente zusammen in Breite und Höhe montiert werden, wird es ein überlappendes Abdeckungsmaterial zwischen irgendeinem Isolierungselement (1) und dem benachbarten Isolierungselement (1).

13. Isolierungselement nach einem der vorgehenden Ansprüche, wobei Anpassungsmittel (4, 10, 50, 51, 52) in der oberen Fläche und der unteren Fläche des Isolierungselements bereitgestellt sind, indem die Anpassungsmittel (4, 10, 50, 51, 52) zum Sichern der Montierung in der richtigen Position im Verhältnis zu anderen Isolierungselementen (1), Ablaufelementen oder Bauelementen bereitgestellt sind.

14. Isolierungselement nach Anspruch 13, wobei das Anpassungsmittel eine Mehrheit von vorspringenden Zapfen/Splinten (4, 50) in der oberen oder unteren Fläche und eine Mehrheit von Ausnehmungen (10, 51) in der anderen der oberen oder unteren Fläche, die keine vorspringenden Zapfen aufweist, umfasst, wobei die vorspringenden Zapfen (4, 50) in einem ersten Isolierungselement (1) mit Ausnehmungen (10, 51) in einem zweiten Isolierungselement (1) zusammenwirkt zur präzisen vertikalen Anpassung, wenn zwei Isolierungselemente (1) zusammen montiert werden.

15. Isolierungselement nach einem der vorgehenden Ansprüche, wobei das Isolierungselement (1) aus verklebten Kugeln aus expandiertem Polystyrol gebildet ist.

16. Verfahren zur Herstellung eines Isolierungselements (1) nach einem der vorgehenden Ansprüche, wobei das Herstellungsverfahren das Bereitstellen einer Form (70), umfassend eine Mehrheit von Seiten (6 ', 7', 8 ', 9', 11 ' , 12) zum Expandieren oder Extrudieren eines Isolierungselements (1), umfasst, **gekennzeichnet durch:**
Anordnen in mindestens einer Seite (8 ', 9') der Form einer Mehrheit von Öffnungen zum Aufnehmen einer entsprechenden Anzahl von vorspringenden Speeren (71), die in einem Ende wiederum mit einem ersten Kernzug (73) verbunden sind, und das Herstellungsverfahren weiter Folgendes umfasst: Bereitstellen einer Ausnehmung im Ende der Speere (71), die vom Kernzug (73) wegzeigen, und weiter Bereitstellen eines zweiten Satzes von Speeren (72), die auf einem zweiten Kernzug (74) montiert sind, wobei Kernzüge (73,74) die Speere (71 , 72) durch ausgeformte Kanäle in den entgegengesetzten Seiten (8 ', 9') der Form führen, so dass die Speere innerhalb der Form einander erreichen, und dass die Speere (71) mit einer Ausnehmung in dem Ende mit dem jeweiligen mit dem zweiten Kernzug (74) verbundenen Speer (72) zusammenwirken und diesem entspricht, welcher Kernzug den ersten Satz von Speeren (71, 72), montiert am ersten Kernzug (73, 74), in die erste Seite (9', 8') der Form mit Öffnungen zum Aufnehmen der Speere (71, 72) führt, und das Herstellungsverfahren umfasst weiter Folgendes:
Bereitstellen der Seiten (7 ', 8', 9 ', 11', 12) in der Form, so dass die Form auf allen Seiten außer einer letzten Seite (6 ') geschlossen ist,
Einführen des ersten Satzes von Speeren (71), befestigt am ersten Kernzug (73), in die erste Seite (9') der Form mit Kanälen zum Aufnehmen von Speeren (71), und weiter
Einführen des zweiten Satzes von Speeren (72), befestigt am zweiten Kernzug (74), in die andere Seite (8') der Form mit Kanälen zum Aufnehmen von Speeren (72), und weiter
Anordnen der letzten Seite (6') in der Form, so dass die Form auf allen Seiten geschlossen ist,
Einfüllen von Material in die Form, das sich dann in der Form expandiert oder extrudiert wird,
wenn das Material in der Form expandiert oder extrudiert ist, Wegziehen des ersten Kernzugs (73) von der Form, so dass die Speere (71) von der Form vollkommen weggezogen werden, und Wegziehen des anderen Kernzugs (74) von der Form, so dass die Speere (72) von der Form vollkommen weggezogen werden, und
Entfernen der Form vom expandierten oder extrudierten Material durch Entfernung zuerst der zuletzt montierten Seite (6 ') und dann Auspressen des extrudierten Elements.

17. Verfahren zur Herstellung eines Isolierungselements (1) nach Anspruch 16, indem das Verfahren weiter Folgendes umfasst
Anordnen einer Mehrheit von Speeren (81) in der letzten Seite (6 '), um horizontale Kanäle im Isolierungselement (1) zu bilden,
Anordnen im ersten und/oder zweiten Satz von Speeren (71,72) einer Mehrheit von Ausnehmungen oder Durchgangskanälen (100) zum Zusammenwirken mit kreuzenden Speeren (81), und das Herstellungsverfahren weiter Folgendes umfasst:
Anordnen der Seiten (7 ', 8', 9 ', 11', 12) in der Form, so dass die Form auf allen Seiten außer einer letzten Seite (6') geschlossen ist,
Einführen des ersten Satzes von Speeren (71), befestigt am ersten Kernzug (73), in die erste Seite (9') der Form mit Kanälen zum Aufnehmen von Speeren (71), und weiter alternativ
Einführen des zweiten Satzes von Speeren (72), befestigt am zweiten Kernzug (74), in die andere Seite (8') der Form mit Kanälen zum Aufnehmen von Speeren (72), und weiter
Anordnen der letzten Seite (6 ') umfassend der Speere in der Form (81) in der entsprechenden Position, so dass die Speere mit den Ausnehmungen (100) im ersten und zweiten Satz von Speeren (71, 72) eingreifen, so dass die Speere (71, 72, 81 ) in einer festen Position aufliegen, wenn sie montiert sind,
und so dass die Form auf allen Seiten geschlossen ist,
Einfüllen von Material in die Form, das sich dann in der Form expandiert oder
extrudiert wird,
wenn das Material in der Form expandiert oder extrudiert ist, Wegziehen der letzten Seite (6 ') mit Speeren (81) von der Form, so dass die Speere (81) von der Form vollkommen weggezogen werden, dann Wegziehen des ersten und
jedes anderen Kernzugs (73, 74) von der Form, so dass die Speere (71, 72) von der Form vollkommen weggezogen werden, und dann Auswerfen des extrudierten Elements.

## Revendications

1. Elément isolant (1) destiné à être fixé extérieurement à une paroi extérieure, constitué d'un seul bloc, normalement rectangulaire, de matériau isolant, le matériau isolant étant du polystyrène expansé, de l'EPS ou du polystyrène extrudé, XPS,
le bloc ayant un côté arrière (6), un côté avant (7), une partie supérieure (8), une partie inférieure (9), un premier (11) et un deuxième (12) côté, le côté arrière (6) en utilisation faisant face à une paroi à laquelle il sera monté, et le côté avant (7) en utilisation étant tourné à l'écart de la paroi à laquelle il doit être assemblé, et
un premier ensemble d'une pluralité de canaux de drainage (2) dans une première orientation à travers le matériau isolant,
dans lequel le premier ensemble de canaux de drainage (2) est disposé dans une orientation verticale de haut en bas de l'élément d'isolation (1),
dans lequel le premier ensemble de canaux de drainage (2) comprend une pluralité de canaux de drainage verticaux dans deux couches verticales ou plus par rapport au côté arrière (6) dans l'élément d'isolation (1),
dans lequel un deuxième ensemble d'une pluralité de canaux de drainage (3) est disposé dans une deuxième orientation à travers l'élément d'isolation (1), dans lequel le deuxième ensemble de canaux de drainage (3) est arrangé dans une orientation horizontale depuis le côté arrière vers le côté avant de l'élément isolant, ou
le deuxième ensemble de canaux de drainage (3) est arrangé dans une orientation angulaire, différente de 90 par rapport à l'orientation du premier ensemble de canaux de drainage (2) depuis le dessus sur le côté arrière (6) vers le bas vers le côté avant (7) de l'élément isolant,
dans lequel chaque canal de drainage dans le deuxième ensemble de canaux de drainage (3) s'ouvre dans l'un :
d'un espace créé par des bosses / pattes (5) en saillie et disposées sur le côté avant et / ou arrière (6, 7) pour canaliser l'humidité de diffusion vers les canaux de drainage (3), et
d'un premier évidement sur le côté arrière (6), et d'un deuxième évidement (120) sur le côté avant (7).

2. Elément isolant selon la revendication 1, dans lequel au moins l'un du nombre de canaux de drainage (2) dans le premier ensemble coupe à travers, au moins partiellement, au moins l'un du nombre de canaux de drainage (3) dans le deuxième ensemble afin de former une communication de drainage (34) entre les canaux d'intersection.

3. Elément isolant selon l'une quelconque des revendications précédentes, dans lequel le deuxième ensemble de canaux de drainage (3) est arrangé dans une orientation horizontale depuis le côté arrière (6) vers le côté avant (7) de l'élément isolant (1).

4. Elément isolant selon l'une quelconque des revendications précédentes, dans lequel les canaux de drainage (2,3) sont régulièrement répartis dans tout l'élément isolant (1) dans les deux orientations.

5. Elément isolant selon l'une quelconque des revendications précédentes, dans lequel le premier ensemble de canaux de drainage (2) présente un diamètre supérieur à celui du deuxième ensemble de canaux de drainage (3).

6. Elément isolant selon l'une quelconque des revendications 1 à 4, dans lequel le premier ensemble de canaux de drainage (2) présente un diamètre égal à celui du deuxième ensemble de canaux de drainage (3).

7. Elément isolant selon l'une quelconque des revendications 1 à 4, dans lequel le premier ensemble de canaux de drainage (2) présente un diamètre inférieur à celui du deuxième ensemble de canaux de drainage (3).

8. Elément isolant selon l'une quelconque des revendications précédentes, dans lequel le premier ensemble de canaux de drainage (2) et / ou le deuxième ensemble de canaux de drainage (3) sont de forme conique.

9. Elément isolant selon l'une quelconque des revendications précédentes, dans lequel la superficie totale des premiers évidements (120) sur le premier côté (6) est supérieure à la superficie totale du premier côté qui ne fait pas partie des évidements (120).

10. Elément isolant selon l'une quelconque des revendications précédentes, dans lequel la superficie totale des deuxièmes évidements (120) sur le deuxième côté (7) est supérieure à la superficie totale sur deuxième côté qui ne fait pas partie des évidements (120).

11. Elément isolant selon l'une quelconque des revendications précédentes, dans lequel sur le deuxième côté (7) de l'élément isolant (1) est agencé un matériau de couverture (110) qui est perméable aux fluides et non perméable aux particules telles que le sable et le sol.

12. Elément isolant selon la revendication 11, dans lequel : le matériau de couverture (110) est agencé sur la totalité de l'au moins un côté (6,7) et avec un rabat saillant dans au moins une direction verticale de l'élément isolant (1) et au moins une direction horizontale de l'élément isolant (1), si bien que lors du montage de plusieurs éléments isolants ensemble en largeur et en hauteur, il s'agira d'un matériau de couverture chevauchant entre un élément isolant (1) quelconque et l'élément isolant adjacent (1).

13. Elément isolant selon l'une quelconque des revendications précédentes, dans lequel un moyen d'alignement (4, 10, 50, 51, 52) est pourvu dans la surface supérieure et la surface inférieure de l'élément isolant, ledit moyen d'alignement (4, 10, 50, 51, 52) étant prévu pour assurer le montage dans la position correcte par rapport à d'autres éléments isolants (1), éléments de drainage ou éléments de construction.

14. Elément isolant selon la revendication 13, dans lequel le moyen d'alignement comprend une pluralité de broches / fiches en saillie (4, 50) dans la surface supérieure ou inférieure et une pluralité d'évidements (10, 51) dans l'autre de la surface supérieure ou inférieure qui ne comporte pas de broches saillantes, les broches saillantes (4, 50) dans un premier élément isolant (1) coopérant avec des évidements (10, 51) dans un deuxième élément isolant (1) pour un alignement vertical précis lors du montage de deux éléments isolants (1) ensemble.

15. Elément isolant selon l'une quelconque des revendications précédentes, dans lequel l'élément isolant (1) est constitué de sphères de polystyrène expansé collées.

16. Procédé de production d'un élément isolant (1) selon l'une quelconque des revendications précédentes, dans lequel le procédé de production comprend la fourniture d'une forme (70) comprenant une pluralité de côtés (6', 7', 8', 9', 11', 12) pour dilater ou extruder un élément isolant (1), **caractérisé par** :
l'agencement dans au moins un côté (8', 9') de la forme d'une pluralité d'ouvertures pour recevoir un nombre correspondant de barres en saillie (71) qui sont à leur tour raccordées dans une extrémité à un premier extracteur de noyau (73), et le procédé de production comprenant en outre : la fourniture d'un évidement dans l'extrémité des barres (71) pointant à l'écart de l'extracteur de noyau (73), et en outre la fourniture d'un deuxième ensemble de barres (72) montées sur un deuxième extracteur de noyau (74), des extracteurs de noyau (73,74) conduisant les barres (71, 72) à travers des canaux conçus dans les côtés opposés (8, 9') de la forme de telle sorte que les barres se rapprochent l'une de l'autre à l'intérieur de la forme, et que les barres (71) avec un évidement dans l'extrémité correspondent à et interagissent avec la barre respective (72) raccordée au deuxième extracteur de noyau (74), conduisant le premier ensemble de barres (71, 72) montées sur le premier extracteur de noyau (73, 74) dans le premier côté (9', 8') de la forme ayant des ouvertures pour recevoir les barres (71, 72), et
le procédé de production comprenant en outre :
la fourniture des côtés (7', 8', 9', 11', 12) dans la forme si bien que la forme est fermée sur tous les côtés à l'exception d'un dernier côté (6 '),
l'insertion du premier ensemble de barres (71) fixé au premier extracteur de noyau (73) dans le premier côté (9') de la forme ayant des canaux pour recevoir des barres (71), et en outre
l'insertion du deuxième ensemble de barres (72) fixé au deuxième extracteur de noyau (74) dans l'autre côté (8') de la forme ayant des canaux pour recevoir des barres (72), et en outre
l'agencement du dernier côté (6') dans la forme si bien que la forme est fermée sur tous les côtés,
le remplissage de matériau dans la forme qui se dilate ensuite ou s'extrude dans la forme,
lorsque le matériau dans la forme est dilaté ou extrudé, la traction du premier extracteur de noyau (73) à l'écart de la forme si bien que les barres (71) sont complètement tirés à l'écart de la forme, et la traction de l'autre extracteur de noyau (74) à l'écart de la forme si bien que les barres (72) sont complètement tirées à l'écart de la forme, et
le retrait de la forme d'un matériau dilaté ou extrudé, en retirant d'abord le côté dernier monté (6') et en poussant ensuite l'élément extrudé.

17. Procédé de production d'un élément isolant (1) selon la revendication 16, le procédé comprenant en outre
l'agencement d'une pluralité de barres (81) dans le dernier côté (6') afin de former des canaux horizontaux dans l'élément isolant (1),
l'agencement dans le premier et / ou le deuxième ensemble de barres (71,72) d'une pluralité d'évidements ou de canaux traversants (100) pour coopérer avec une barre se croisant (81), et le procédé de production comprenant en outre :
l'agencement des côtés (7', 8', 9', 11', 12) dans une forme si bien que la forme est fermée sur tous les côtés à l'exception d'un dernier côté (6'),
l'insertion du premier ensemble de barres (71) fixé au premier extracteur de noyau (73) dans le premier côté (9') de la forme ayant des canaux pour recevoir des barres (71), et en outre en variante
l'insertion du deuxième ensemble de barres (72) fixé au deuxième extracteur de noyau (74) dans l'autre côté (8) de la forme ayant des canaux pour recevoir les barres (72), et en outre
l'agencement du dernier côté (6') comprenant les barres dans la forme (81) dans la position correspondante si bien que les barres entrent en prise avec les évidements (100) dans les premier et deuxième ensembles de barres (71, 72) si bien que les barres (71, 72, 81) restent dans une position fixe lorsqu'elles sont montées, et si bien que la forme est fermée sur tous les côtés,
le remplissage de matériau dans la forme qui se dilate ensuite ou s'extrude dans la forme,
lorsque le matériau dans la forme est dilaté ou extrudé, la traction du dernier côté (6') avec les barres (81) à l'écart de la forme si bien que les barres (81) sont entièrement tirées à l'écart de la forme, puis la traction des premier et
autre extracteurs de noyau (73, 74) à l'écart de la forme si bien que les barres (71, 72) sont entièrement tirées à l'écart de la forme, puis en éjectant l'élément extrudé.
